# EUROPEAN PATENT APPLICATION

(11) **EP 4 636 032 A1**
(43) Date of publication of application: **22.10.2025**
(21) Application number: 24760488.7
(22) Date of filing: 24.01.2024
(51) Int. Cl.: C08L 51/04, C08L 25/12, C08L 7/00

(54) **THERMOPLASTIC RESIN COMPOSITION**

(30) Priority: 20.02.2023 KR 20230022182
(71) Applicant: LG CHEM, LTD., Seoul 07336 (KR)
(72) Inventor: CHOI, Jeong Su, Daejeon 34122 (KR); LEE, Won Seok, Daejeon 34122 (KR); LEE, Roo Da, Daejeon 34122 (KR); PARK, Sang Hoo, Daejeon 34122 (KR); LEE, Jong Ju, Daejeon 34122 (KR); HWANG, Hee Dong, Daejeon 34122 (KR)
(74) Representative: Plasseraud IP
(86) International application number: PCT/KR2024/001140
(87) International publication number: WO 2024/177296

(57) **Abstract**

The present invention relates to a thermoplastic resin composition, wherein the thermoplastic resin composition includes a graft polymer including a rubber and a shell including a vinyl aromatic monomer unit and a vinyl cyanide-based monomer unit grafted to the rubber; and a non-grafted polymer including a vinyl aromatic monomer unit and a vinyl cyanide-based monomer unit, wherein the rubber is natural rubber; or a rubber mixture including natural rubber and synthetic rubber; and the content of biomass ranges from 20.0 to 50.0% by weight, as measured according to ASTM D6866.

## Description

### [Technical Field]

### [CROSS-REFERENCE TO RELATED APPLICATIONS]

This application claims priority to and the benefit of Korean Patent Application No. 10-2023-0022182, filed February 20, 2023, the disclosure of which is incorporated herein by reference in its entirety.

### [Technical Field]

The present invention relates to a thermoplastic resin composition.

### [Background Art]

A diene-based graft polymer includes a diene-based rubbery polymer; and a shell including a vinyl aromatic monomer unit and a vinyl cyanide-based monomer unit grafted to the diene-based rubbery polymer. Diene-based graft polymers have been widely used in home appliances and automobile fields because they have an excellent balance of physical properties such as flowability, impact resistance, gloss characteristics, and the like. However, because the raw materials used in the manufacturing process are petrochemical-based compounds, they have a negative impact on the environment.

In recent years, as interest in sustainable development increases, products using recycled diene-based graft polymers or bio-based plastics are being developed. Bio-based plastic is a material that focuses on reducing carbon dioxide by adding carbon-neutral plant biomass. Bio-based plastics are classified by testing and analyzing the biomass content and whether or not they contain heavy metals. The biomass content of the bio-based plastics is based on the content of radioactive carbon (C14) measured according to ASTM D6866. This is because the ratio of radioactive carbon in living animals and plants matches the ratio in the air as plants fix carbon in the atmosphere through photosynthesis and radioactive carbon has a certain half-life. Countries around the world recognize bio-based plastics based on the biomass content measured according to ASTM D6866. Specifically, Korea, the United States, and Japan recognize materials having a biomass content of 25.0% by weight or more as bio-based plastics, and Germany recognizes materials having a biomass content of 20.0% by weight or more as bio-based plastics.

Meanwhile, a natural rubber is a naturally-derived material made by collecting the juice of *Hevea brasiliensis.* Because carbon dioxide is fixed as the tree grows, it may be used as an eco-friendly raw material. There have been attempts to manufacture diene-based graft polymers using natural rubber, but because natural rubber and synthetic rubber were used together as rubber products, the carbon reduction effect was not significant, thereby making it difficult to satisfy the biomass content suggested by each country.

### [Related Art Document]

### [Patent Document]

Patent Document 1: JP5270101B

### [Disclosure]

### [Technical Problem]

Therefore, it is an object of the present invention to provide a thermoplastic resin composition that has a significant carbon reduction effect while exhibiting excellent basic physical properties, and can be recognized as a bio-based plastic in countries around the world.

### [Technical Solution]

To achieve the above object, according to one aspect of the present invention:
1) There is provided a thermoplastic resin composition including a graft polymer including a rubber and a shell including a vinyl aromatic monomer unit and a vinyl cyanide-based monomer unit grafted to the rubber; and a non-grafted polymer including a vinyl aromatic monomer unit and a vinyl cyanide-based monomer unit, wherein the rubber is natural rubber; or a rubber mixture including natural rubber and synthetic rubber, and the content of biomass ranges from 20.0 to 50.0% by weight, as measured according to ASTM D6866.
2) According to 1), the present invention may provide a thermoplastic resin composition, wherein the thermoplastic resin composition has a biomass content of 25.0 to 50.0% by weight, as measured according to ASTM D6866.
3) According to 1) or 2), the present invention may provide a thermoplastic resin composition, wherein the natural rubber is one or more selected from the group consisting of concentrated natural rubber, deproteinized natural rubber, crosslinked natural rubber, hydrogenated natural rubber, and epoxidized natural rubber.
4) According to any one of 1) to 3), the present invention may provide a thermoplastic resin composition, wherein the rubber mixture includes 90.0 to 99.0% by weight of the natural rubber and 1.0 to 10.0% by weight of the synthetic rubber based on the total weight of the rubber mixture.
5) According to any one of 1) to 4), the present invention may provide a thermoplastic resin composition, wherein the synthetic rubber includes one or more selected from the group consisting of a diene-based rubber polymer and an acrylic rubber polymer.
6) According to any one of 1) to 5), the present invention may provide a thermoplastic resin composition, wherein the thermoplastic resin composition includes 20.0 to 40.0% by weight of the rubber.
7) According to any one of 1) to 6), the present invention may provide a thermoplastic resin composition, wherein the thermoplastic resin composition includes 35.0 to 68.0% by weight of the vinyl aromatic monomer unit.
8) According to any one of 1) to 7), the present invention may provide a thermoplastic resin composition, wherein the thermoplastic resin composition includes 6.0 to 30.0% by weight of the vinyl cyanide-based monomer unit.
9) According to any one of 1) to 8), the present invention may provide a thermoplastic resin composition, wherein the shell includes a (meth)acrylate-based monomer unit grafted to the rubber.
10) According to any one of 1) to 9), the present invention may provide a thermoplastic resin composition, wherein the non-grafted polymer includes a (meth)acrylate-based monomer unit.

### [Advantageous Effects]

A thermoplastic resin composition according to the present invention has a significant carbon reduction effect while exhibiting excellent basic physical properties, and can be recognized as a bio-based plastic in countries around the world.

### [Best Mode]

Terms and words used in the present specification and claims should not be interpreted as being limited to commonly used meanings or meanings in dictionaries and should be interpreted as having meanings and concepts which are consistent with the technical spirit of the present invention based on the principle that inventors have appropriately defined concepts of the terms in order to describe the present invention in the best way.

In the present invention, the average particle diameter may be measured using a dynamic light scattering method. Specifically, the average particle diameter may refer to an arithmetic average particle diameter in the particle size distribution measured by the dynamic light scattering method, that is, an average particle diameter of scattering intensity.

Also, in the present invention, the average particle diameter may be measured using a Nicomp 380 apparatus (Particle Sizing Systems).

In the present invention, natural rubber is not particularly limited as long as it is a natural rubber collected from nature. In this case, the natural rubber may be one or more selected from the group consisting of concentrated natural rubber, deproteinized natural rubber, crosslinked natural rubber, hydrogenated natural rubber, and epoxidized natural rubber. The natural rubber may be poly(cis-isoprene) collected from nature.

The concentrated natural rubber may refer to a rubber obtained by centrifuging natural rubber fluid collected from nature to separate natural rubber and concentrating the natural rubber.

The deproteinized natural rubber may refer to rubber obtained by removing protein from natural rubber.

The crosslinked natural rubber may refer to natural rubber crosslinked through vulcanization, peroxide crosslinking, photo-crosslinking, and the like.

The hydrogenated natural rubber may refer to rubber obtained by partially hydrogenating double bonds of natural rubber.

The epoxidized natural rubber may refer to natural rubber into which an epoxy group has been introduced, preferably natural rubber into which 10 to 50 mol% of an epoxy group has been introduced.

In the present invention, the diene-based rubber polymer may be a polymer prepared by polymerizing, specifically crosslinking, diene-based monomers; or a diene-based monomer and a vinyl aromatic monomer. The diene-based monomer may be one or more selected from the group consisting of 1,3-butadiene, isoprene, chloroprene, and piperylene. Among them, 1,3-butadiene is preferred. The vinyl aromatic monomer may be one or more selected from the group consisting of styrene, α-methyl styrene, α-ethyl styrene, and p-methyl styrene. Among then, styrene is preferred. The diene-based rubber polymer may be one or more selected from the group consisting of polybutadiene, and a styrene-butadiene copolymer.

In the present invention, the acrylic rubber polymer may be prepared by polymerizing, specifically crosslinking, (meth)acrylate-based monomers. The (meth)acrylate-based monomer may be an expression encompassing both acrylate-based and methacrylate-based monomers. The (meth)acrylate monomer may be one or more selected from the group consisting of methyl acrylate, ethyl acrylate, butyl acrylate, 2-ethylhexyl acrylate, methyl methacrylate, ethyl methacrylate, butyl methacrylate, and 2-ethylhexyl methacrylate. Among them, butyl acrylate is preferred.

In the present invention, the vinyl aromatic monomer unit may be a unit derived from a vinyl aromatic monomer. The types of vinyl aromatic monomers are as described above.

In the present invention, the vinyl cyanide-based monomer unit may be a unit derived from a vinyl cyanide-based monomer. The vinyl cyanide-based monomer unit may be one or more selected from the group consisting of acrylonitrile, methacrylonitrile, phenylacrylonitrile, and α-chloroacrylonitrile. Among them, acrylonitrile is preferred.

In the present invention, the (meth)acrylate-based monomer unit may be a unit derived from a (meth)acrylate-based monomer. The (meth)acrylate-based monomer may be an expression encompassing both acrylate-based and methacrylate-based monomers. Specific types of the (meth)acrylate monomer are as described above.

### 1. Thermoplastic resin composition

A thermoplastic resin composition according to one embodiment of the present invention includes a graft polymer including a rubber and a shell including a vinyl aromatic monomer unit and a vinyl cyanide-based monomer unit grafted to the rubber; and a non-grafted polymer including a vinyl aromatic monomer unit and a vinyl cyanide-based monomer unit.

The thermoplastic resin composition may have a biomass content of 20.0 to 50.0% by weight, preferably 20.0 to 40.0% by weight, as measured according to ASTM D6866. When the above-described condition is satisfied, the thermoplastic resin composition may be recognized as a bio-based plastic in countries around the world. Also, the impact strength of the thermoplastic resin composition may be further improved. When the biomass content falls below the above-described condition, the thermoplastic resin composition cannot be recognized as a bio-based plastic in countries around the world. When the biomass content exceeds the above-described condition, the flowability of the thermoplastic resin composition may be degraded, making it difficult to process.

The rubber is natural rubber; or a rubber mixture including natural rubber and synthetic rubber.

The synthetic rubber may be one or more selected from the group consisting of a diene-based rubber polymer and an acrylic rubber polymer.

The rubber mixture may include 90.0 to 99.0% by weight of the natural rubber and 1.0 to 10.0% by weight of the synthetic rubber, preferably 90.0 to 95.0% by weight of the natural rubber and 5.0 to 10.0% by weight of the synthetic rubber, based on the total weight of the rubber mixture. When the above-described condition is satisfied, the impact strength of the thermoplastic resin composition may be further improved.

The thermoplastic resin composition may include 20.0 to 40.0% by weight, preferably 20.0 to 35.0% by weight, of the rubber, based on the total weight of the thermoplastic resin composition. When the above-described condition is satisfied, the processability of the thermoplastic resin composition may be improved.

The thermoplastic resin composition may include 35.0 to 68.0% by weight, preferably 40.0 to 60.0% by weight, of the vinyl aromatic monomer unit, based on the total weight of the thermoplastic resin composition. When the above-described condition is satisfied, the processability of the thermoplastic resin composition may be improved.

The content of the vinyl aromatic monomer unit may be the sum of the contents of the vinyl aromatic monomer units included in the graft polymer and the non-grafted polymer, which are components of the thermoplastic resin composition.

The thermoplastic resin composition may include 6.0 to 30.0% by weight, preferably 10.0 to 25.0% by weight, of the vinyl cyanide-based monomer unit, based on the total weight of the thermoplastic resin composition. When the above-described condition is satisfied, the impact strength and chemical resistance of the thermoplastic resin composition may be improved. The content of the vinyl cyanide-based monomer unit may be the sum of the contents of the vinyl cyanide-based monomer units included in the graft polymer and the non-grafted polymer, which are components of the thermoplastic resin composition.

The thermoplastic resin composition may include a (meth)acrylate-based monomer unit to improve colorability. The thermoplastic resin composition may include 1.0 to 20.0% by weight, preferably 1.0 to 10.0% by weight, of the (meth)acrylate-based monomer unit, based on the total weight of the thermoplastic resin composition. When the above-described condition is satisfied, the strength and colorability of the thermoplastic resin composition may be improved. The content of the (meth)acrylate-based monomer unit may be the sum of the contents of the (meth)acrylate-based monomer units included in the graft polymer and the non-grafted polymer, which are components of the thermoplastic resin composition.

Meanwhile, the graft polymer includes a rubber; and a shell including a vinyl aromatic monomer unit and a vinyl cyanide-based monomer unit grafted to the rubber.

The graft polymer may include 30.0 to 70.0% by weight, preferably 35.0 to 65.0% by weight, and more preferably 40.0 to 60.0% by weight, of the rubber. When the above-described condition is satisfied, the graft polymer may be easily manufactured, and flocculation properties may be improved.

The graft polymer may include 20.0 to 60.0% by weight, preferably 25.0 to 55.0% by weight, and more preferably 30.0 to 50.0% by weight, of the vinyl aromatic monomer unit. When the above-described condition is satisfied, the processability of the graft polymer may be improved.

The graft polymer may include 5.0 to 25.0% by weight, preferably 7.0 to 23.0% by weight, and more preferably 10.0 to 21.0% by weight, of the vinyl cyanide-based monomer unit. When the above-described condition is satisfied, the chemical resistance of the graft polymer may be improved.

To improve the colorability of the graft polymer, the shell may include a (meth)acrylate-based monomer unit grafted to the rubber.

The graft polymer may include 30.0 to 70.0% by weight, preferably 35.0 to 65.0% by weight, of the rubber. When the above-described condition is satisfied, the graft polymer may be easily manufactured, and flocculation properties may be improved.

The graft polymer may include 18.0 to 60.0% by weight, preferably 20.0 to 50.0% by weight, of the vinyl aromatic monomer unit. When the above-described condition is satisfied, the processability of the graft polymer may be improved.

The graft polymer may include 4.5 to 28.0% by weight, preferably 6.0 to 20.0% by weight, of the vinyl cyanide-based monomer unit. When the above-described condition is satisfied, the chemical resistance of the graft polymer may be improved.

The graft polymer may include 0.5 to 10.0% by weight, preferably 0.5 to 5.0% by weight, of the (meth)acrylate-based monomer unit. When the above-described condition is satisfied, the colorability of the graft polymer may be further improved.

The graft polymer may include natural rubber; and a shell including a styrene unit and an acrylonitrile unit grafted to the natural rubber.

The graft polymer may include a rubber mixture including natural rubber and a diene-based rubbery polymer; and a shell including a styrene unit and an acrylonitrile unit grafted to the rubber mixture.

Meanwhile, the non-grafted polymer includes a vinyl aromatic monomer unit and a vinyl cyanide-based monomer unit.

The non-grafted polymer may include 50 to 90% by weight, preferably 65 to 85% by weight, and more preferably 70 to 80% by weight, of the vinyl aromatic monomer unit. When the above-described condition is satisfied, the processability of the non-grafted polymer may be further improved.

The non-grafted polymer may include 10.0 to 50.0% by weight, preferably 15.0 to 35.0% by weight, and more preferably 20.0 to 30.0% by weight, of the vinyl cyanide-based monomer unit. When the above-described condition is satisfied, the chemical resistance of the non-grafted polymer may be improved.

The non-grafted polymer may include a (meth)acrylate-based monomer unit to improve colorability.

The non-grafted polymer may include 60 to 80% by weight, preferably 65 to 75% by weight, of the vinyl aromatic monomer unit. When the above-described condition is satisfied, the processability of the non-grafted polymer may be improved.

The non-grafted polymer may include 10.0 to 30.0% by weight, preferably 15.0 to 25.0% by weight, of the vinyl cyanide-based monomer unit. When the above-described condition is satisfied, the chemical resistance of the non-grafted polymer may be improved.

The non-grafted polymer may include 1.0 to 20.0% by weight, preferably 5.0 to 15.0% by weight, of the (meth)acrylate-based monomer unit. When the above-described condition is satisfied, the colorability of the non-grafted polymer may be further improved.

The non-grafted polymer may be a binary copolymer composed of the vinyl aromatic monomer unit and the vinyl cyanide-based monomer unit; or a terpolymer composed of the vinyl aromatic monomer unit, the vinyl cyanide-based monomer unit, and the (meth)acrylate-based monomer unit. Specifically, the non-grafted polymer may be a styrene/acrylonitrile polymer or a styrene/acrylonitrile/methyl methacrylate polymer.

The thermoplastic resin composition may include 30.0 to 95.0% by weight, preferably 35.0 to 93.0% by weight, and more preferably 40.0 to 90.0% by weight, of the graft polymer. When the above-described condition is satisfied, the impact resistance of the thermoplastic resin composition may be improved.

The thermoplastic resin composition may include 5.0 to 70.0% by weight, preferably 7.0 to 65.0% by weight, and more preferably 10.0 to 60.0% by weight, of the non-grafted polymer. When the above-described condition is satisfied, the processability and chemical resistance of the thermoplastic resin composition may be improved.

The thermoplastic resin composition may include one or more additives selected from the group consisting of natural rosin soap and ethylenebis stearamide.

### [Mode for Invention]

Hereinafter, embodiments of the present invention will be described in detail so that a person having ordinary skill in the art to which the present invention pertains can easily carry out the invention. However, it should be understood that the present invention may be embodied in various forms and is not limited to the embodiments described herein.

### Preparation Example 1

A mixture including 37.0 parts by weight of styrene (S), 13.0 parts by weight of acrylonitrile (AN), 0.3 parts by weight of tertiary dodecyl mercaptan, 0.3 parts by weight of sodium oleate, 0.3 parts by weight of tertiary butyl hydroperoxide, 0.014 parts by weight of iron (II) sulfate, 0.700 parts by weight of tetrasodium pyrophosphate, 1.500 parts by weight of dextrose, and 50.0 parts by weight of distilled water was prepared.

50.0 parts by weight of deproteinized natural rubber (Selatex3821 from Sumitomo Rubber), 2.0 parts by weight of sodium dodecyl sulfate, 0.5 parts by weight of cumene hydroperoxide, 0.006 parts by weight of iron (II) sulfate, 0.300 parts by weight of tetrasodium pyrophosphate, 0.700 parts by weight of dextrose, and 100.0 parts by weight of distilled water were added to a reactor and allowed to react at 70°C for 5 hours.

Next, the mixture was allowed to react while being continuously added to the reactor (internal temperature: 70°C) at a constant rate for 4 hours. Thereafter, the mixture was aged for an hour, and the reaction was then terminated to manufacture graft polymer latex.

The graft polymer latex was agglomerated with 2.0 parts by weight of calcium carbonate, washed, dehydrated, and dried to prepare a graft polymer powder.

### Preparation Example 2

A mixture including 37.0 parts by weight of styrene (S), 13.0 parts by weight of acrylonitrile (AN), 0.3 parts by weight of sodium oleate, 0.3 parts by weight of tertiary dodecyl mercaptan, 0.3 parts by weight of tertiary butyl hydroperoxide, 0.014 parts by weight of iron (II) sulfate, 0.700 parts by weight of tetrasodium pyrophosphate, 1.500 parts by weight of dextrose, and 50.0 parts by weight of distilled water was prepared.

50.0 parts by weight of deproteinized natural rubber (Selatex3821 from Sumitomo Rubber), 2.0 parts by weight of sodium dodecyl sulfate, and 100.0 parts by weight of distilled water were added to a reactor, and the internal temperature of the reactor was raised to 70°C.

Next, the mixture was allowed to react while being continuously added to the reactor (internal temperature: 70°C) at a constant rate for 4 hours. Thereafter, the mixture was aged for an hour, and the reaction was then terminated to manufacture graft polymer latex.

The graft polymer latex was agglomerated with 2.0 parts by weight of calcium carbonate, washed, dehydrated, and dried to prepare a graft polymer powder.

### Preparation Example 3

A mixture including 37.0 parts by weight of styrene (S), 13.0 parts by weight of acrylonitrile (AN), 0.3 parts by weight of sodium oleate, 0.3 parts by weight of tertiary dodecyl mercaptan, 0.3 parts by weight of tertiary butyl hydroperoxide, 0.014 parts by weight of iron (II) sulfate, 0.700 parts by weight of tetrasodium pyrophosphate, 1.500 parts by weight of dextrose, and 50.0 parts by weight of distilled water was prepared.

50.0 parts by weight (based on solid content) of polybutadiene rubber (PBR; average particle diameter: 300.0 nm) latex, 2.0 parts by weight of sodium dodecyl sulfate, and 100.0 parts by weight of distilled water were added to a reactor, and then kneaded. Then, the internal temperature of the reactor was raised to 70°C.

Next, the mixture was allowed to react while being continuously added to the reactor (internal temperature: 70°C) at a constant rate for 4 hours. Thereafter, the mixture was aged for an hour, and the reaction was then terminated to manufacture graft polymer latex.

The graft polymer latex was agglomerated with 2.0 parts by weight of calcium carbonate, washed, dehydrated, and dried to prepare a graft polymer powder.

### Preparation Example 4

A mixture including 37.0 parts by weight of styrene (S), 13.0 parts by weight of acrylonitrile (AN), 0.3 parts by weight of sodium oleate, 0.3 parts by weight of tertiary dodecyl mercaptan, 0.3 parts by weight of tertiary butyl hydroperoxide, 0.014 parts by weight of iron (II) sulfate, 0.700 parts by weight of tetrasodium pyrophosphate, 1.500 parts by weight of dextrose, and 50.0 parts by weight of distilled water was prepared.

25.0 parts by weight of crosslinked natural rubber (Prevulcanized NR MM Grade from Thaitex), 25.0 parts by weight (based on solid content) of polybutadiene rubber (PBR) latex (average particle diameter: 300 nm), 2.0 parts by weight of sodium dodecyl sulfate, and 100.0 parts by weight of distilled water were added to a reactor, and then kneaded. Then, the temperature of the reactor was raised to 70°C.

Next, the mixture was allowed to react while being continuously added to the reactor (internal temperature: 70°C) at a constant rate for 4 hours. Thereafter, the mixture was aged for an hour, and the reaction was then terminated to manufacture graft polymer latex.

The graft polymer latex was agglomerated with 2.0 parts by weight of calcium carbonate, washed, dehydrated, and dried to prepare a graft polymer powder.

### Preparation Example 5

A mixture including 37.0 parts by weight of styrene (S), 13.0 parts by weight of acrylonitrile (AN), 0.3 parts by weight of sodium oleate, 0.3 parts by weight of tertiary dodecyl mercaptan, 0.3 parts by weight of tertiary butyl hydroperoxide, 0.014 parts by weight of iron (II) sulfate, 0.700 parts by weight of tetrasodium pyrophosphate, 1.500 parts by weight of dextrose, and 50.0 parts by weight of distilled water was prepared.

46.0 parts by weight of crosslinked natural rubber (Prevulcanized NR MM Grade from Thaitex), 4.0 parts by weight (based on solid content) of polybutadiene rubber (PBR, average particle size: 300.0 nm) latex, 2.0 parts by weight of sodium dodecyl sulfate, and 100.0 parts by weight of distilled water were added to a reactor, and then kneaded. Then, the internal temperature of the reactor was raised to 70°C.

Next, the mixture was allowed to react while being continuously added to the reactor (internal temperature: 70°C) at a constant rate for 4 hours. Thereafter, the mixture was aged for an hour, and the reaction was then terminated to manufacture graft polymer latex.

The graft polymer latex was agglomerated with 2.0 parts by weight of calcium carbonate, washed, dehydrated, and dried to prepare a graft polymer powder.

### Preparation Example 6

A mixture including 75.0 parts by weight of styrene (S), 25.0 parts by weight of acrylonitrile (AN), 30.0 parts by weight of toluene, and 0.1 parts by weight of tertiary dodecyl mercaptan was allowed to react while being continuously added to a reactor (internal temperature: 148°C) so that the average reaction time was 3 hours. The polymerization solution discharged from the reactor was heated in a pre-heating tank, unreacted monomers were volatilized in a volatilization tank, and non-grafted polymer pellets were manufactured using a polymer transfer pump extrusion machine.

### Preparation Example 7

A mixture including 70.0 parts by weight of styrene (S), 20.0 parts by weight of acrylonitrile (AN), 10.0 parts by weight of methylmethacrylate, 30.0 parts by weight of toluene, and 0.1 parts by weight of tertiary dodecyl mercaptan was allowed to react while being continuously added to a reactor (internal temperature: 148°C) so that the average reaction time was 3 hours. The polymer solution discharged from the reactor was heated in a pre-heating tank, unreacted monomers were volatilized in a volatilization tank, and non-grafted polymer pellets were manufactured using a polymer transfer pump extrusion machine.

### Examples and Comparative Examples

Descriptions of the components used in the following examples and comparative examples are as follows.
1) Graft polymer
   (1) Preparation Example 1: The graft polymer manufactured in Preparation Example 1 was used.
   (2) Preparation Example 2: The graft polymer manufactured in Preparation Example 2 was used.
   (3) Preparation Example 3: The graft polymer manufactured in Preparation Example 3 was used.
   (4) Preparation Example 4: The graft polymer manufactured in Preparation Example 4 was used.
   (5) Preparation Example 5: The graft polymer manufactured in Preparation Example 5 was used.
2) Non-grafted polymer
   (1) Preparation Example 6: The non-grafted polymer manufactured in Preparation Example 6 was used.
   (2) Preparation Example 7: The non-grafted polymer manufactured in Preparation Example 7 was used.

The above-described components in contents shown in Tables 1 to 3 below were mixed with 0.3 parts by weight of a lubricant (ethylenebis stearamide), 0.2 parts by weight of an antioxidant (IRGANOX1076 from BASF), and 0.2 parts by weight of a second antioxidant (IRGAFOS168 from BASF) to prepare a thermoplastic resin composition.

### Experimental Example 1

The thermoplastic resin compositions of Examples and Comparative Examples were extruded to manufacture pellets. The pellets were injected to manufacture specimens. The physical properties of the specimens were evaluated according to the methods described below. The results are shown in Tables 1 to 3 below.
1) Contents (% by weight) of components of thermoplastic resin composition: The contents of the components were calculated (% by weight) based on the contents (parts by weight) of the natural rubber, polybutadiene rubber (PBR), styrene unit (S unit), and acrylonitrile unit (AN unit) added during the manufacture of the graft copolymer and the non-graft copolymer included in the thermoplastic resin composition.
2) Biomass content (% by weight) in thermoplastic resin composition: The biomass content was measured according to ASTM D6866.
3) Melt flow index (g/10 min): It was measured at 220°C and 10 kg according to ASTM D1238.
4) Impact strength (kgf.cm/cm): The notched Izod impact strength of a specimen (1/4 inch) was measured at 23°C according to ASTM D256.

**[Table 1]**

| Classification | | | Example 1 | Example 2 | Example 3 | Example 4 |
|---|---|---|---|---|---|---|
| Graft polymer | Type | | Preparation Example 1 | Preparation Example 1 | Preparation Example 2 | Preparation Example 2 |
| | Rubber and monomers (parts by weight) | Deproteinized natural rubber | 50.0 | 50.0 | 0.0 | 0.0 |
| | | Crosslinked natural rubber | 0.0 | 0.0 | 50.0 | 50.0 |
| | | PBR | 0.0 | 0.0 | 0.0 | 0.0 |
| | | S | 37.0 | 37.0 | 37.0 | 37.0 |

| | | AN | 13.0 | 13.0 | 13.0 | 13.0 |
|---|---|---|---|---|---|---|
| Non-grafted polymer | Type | | Preparation Example 6 | Preparation Example 6 | Preparation Example 6 | Preparation Example 7 |
| | Monomers (parts by weight) | S | 75.0 | 75.0 | 75.0 | 70.0 |
| | | AN | 25.0 | 25.0 | 25.0 | 20.0 |
| | | MMA | 0.0 | 0.0 | 0.0 | 10.0 |
| Thermoplastic resin composition | Graft polymer powder (parts by weight) | | 40.0 | 50.0 | 60.0 | 50.0 |
| | Non-grafted polymer pellets (parts by weight) | | 60.0 | 50.0 | 40.0 | 50.0 |
| | Deproteinized natural rubber (% by weight) | | 20.0 | 25.0 | 0.0 | 0.0 |
| | Crosslinked natural rubber (% by weight) | | 0.0 | 0.0 | 30.0 | 25.0 |
| | PBR (% by weight) | | 0.0 | 0.0 | 0.0 | 0.0 |
| | S monomer unit (% by weight) | | 59.8 | 56.0 | 52.2 | 53.5 |
| | AN monomer unit (% by weight) | | 20.2 | 19.0 | 17.8 | 16.5 |
| | MMA monomer unit (% by weight) | | 0.0 | 0.0 | 0.0 | 5.0 |
| Physical properties | Biomass (% by weight) | | 20.1 | 25.2 | 30.2 | 25.1 |
| | Melt flow index (g/10 min) | | 19.8 | 14.7 | 12.0 | 13.3 |
| | Impact strength (kgf.cm/cm) | | 12.3 | 15.8 | 20.5 | 15.4 |

**[Table 2]**

| Classification | | | Example 5 | Example 6 | Example 7 |
|---|---|---|---|---|---|
| Graft polymer | Type | | Preparation Example 5 | Preparation Example 1 | Preparation Example 1 |
| | Rubber and monomers (parts by weight) | Deproteinized natural rubber | 0.0 | 50.0 | 50.0 |
| | | Crosslinked natural rubber | 46.0 | 0.0 | 0.0 |
| | | PBR | 4.0 | 0.0 | 0.0 |
| | | S | 37.0 | 37.0 | 37.0 |
| | | AN | 13.0 | 13.0 | 13.0 |
| Non-grafted polymer | Type | | Preparation Example 6 | Preparation Example 6 | Preparation Example 6 |
| | Monomers (parts by weight) | S | 75.0 | 75.0 | 75.0 |
| | | AN | 25.0 | 25.0 | 25.0 |
| | | MMA | 0.0 | 0.0 | 0.0 |
| Thermoplastic resin composition | Graft polymer powder (parts by weight) | | 45.0 | 72.0 | 90.0 |
| | Non-grafted polymer pellets (parts by weight) | | 55.0 | 28.0 | 10.0 |
| | Deproteinized natural rubber (% by weight) | | 0.0 | 36.0 | 45.0 |
| | Crosslinked natural rubber (% by weight) | | 20.7 | 0.0 | 0.0 |
| | PBR (% by weight) | | 1.8 | 0.0 | 0.0 |
| | S monomer unit (% by weight) | | 57.9 | 47.64 | 40.8 |
| | AN monomer unit (% by weight) | | 19.4 | 16.36 | 14.2 |
| | MMA monomer unit (% by weight) | | 0.0 | 0.0 | 0.0 |
| Physical properties | Biomass (% by weight) | | 20.9 | 36.5 | 45.8 |
| | Melt flow index (g/10 min) | | 18.2 | 6.4 | 4.1 |
| | Impact strength (kgf.cm/cm) | | 16.8 | 23.1 | 30.4 |

**[Table 3]**

| Classification | | | Comparative Example 1 | Comparative Example 2 | Comparative Example 3 | Comparative Example 4 |
|---|---|---|---|---|---|---|
| Graft polymer | Type | | Preparation Example 1 | Preparation Example 3 | Preparation Example 4 | Preparation Example 1 |
| | Rubber and monomers (parts by weight) | Deproteinized natural rubber | 50.0 | 0.0 | 0.0 | 50.0 |
| | | Crosslinked natural rubber | 0.0 | 0.0 | 25.0 | 0.0 |
| | | PBR | 0.0 | 50.0 | 25.0 | 0.0 |
| | | S | 37.0 | 37.0 | 37.0 | 37.0 |
| | | AN | 13.0 | 13.0 | 13.0 | 13.0 |
| Non-grafted polymer | Type | | Preparation Example 6 | Preparation Example 6 | Preparation Example 6 | - |
| | Monomers (parts by weight) | S | 75.0 | 75.0 | 75.0 | - |
| | | AN | 25.0 | 25.0 | 25.0 | - |
| Thermoplastic resin composition | Graft polymer powder (parts by weight) | | 30.0 | 50.0 | 50.0 | 100.0 |
| | Non-grafted polymer pellets (parts by weight) | | 70.0 | 50.0 | 50.0 | 0.0 |
| | Deproteinized natural rubber (% by weight) | | 15.0 | 0.0 | 0.0 | 50.0 |
| | Crosslinked natural rubber (% by weight) | | 0.0 | 0.0 | 12.5 | 0.0 |
| | PBR (% by weight) | | 0.0 | 25.0 | 12.5 | 0.0 |
| | S monomer unit (% by weight) | | 63.6 | 56.0 | 56.0 | 0.0 |
| | AN monomer unit (% by weight) | | 21.4 | 19.0 | 19.0 | 0.0 |
| Physical properties | Biomass (% by weight) | | 15.1 | 0.0 | 12.5 | 51.0 |
| | Melt flow index (g/10 min) | | 21.4 | 19.7 | 18.4 | Difficult processing due to very low flowability |
| | Impact strength (kgf.cm/cm) | | 5.7 | 24.5 | 20.4 | |

Referring to Tables 1 to 3, Examples 1 to 7, which have a biomass content of 20.1 to 45.8% by weight measured according to ASTM D6866, not only have excellent basic physical properties such as melt flow index, impact strength, and the like, but also may be recognized as bio-based plastics in countries around the world. However, Comparative Examples 1 to 3, which have a biomass content of less than 20.0% by weight measured according to ASTM D6866, cannot be recognized as bio-based plastics in countries around the world.

Also, Comparative Example 4, which has a biomass content of 51.0% by weight measured according to ASTM D6866, can be recognized as a bio-based plastic in countries around the world, but it is difficult to process due to its very low flowability, which makes it impossible to manufacture a specimen.

## Claims

1. A thermoplastic resin composition comprising a graft polymer including a rubber and a shell including a vinyl aromatic monomer unit and a vinyl cyanide-based monomer unit grafted to the rubber; and a non-grafted polymer including a vinyl aromatic monomer unit and a vinyl cyanide-based monomer unit,
wherein the rubber is natural rubber; or a rubber mixture including natural rubber and synthetic rubber, and
the content of biomass ranges from 20.0 to 50.0% by weight, as measured according to ASTM D6866.

2. The thermoplastic resin composition of claim 1, wherein the thermoplastic resin composition has a biomass content of 25.0 to 50.0% by weight, as measured according to ASTM D6866.

3. The thermoplastic resin composition of claim 1, wherein the natural rubber is one or more selected from the group consisting of concentrated natural rubber, deproteinized natural rubber, crosslinked natural rubber, hydrogenated natural rubber, and epoxidized natural rubber.

4. The thermoplastic resin composition of claim 1, wherein the rubber mixture includes 90.0 to 99.0% by weight of the natural rubber and 1.0 to 10.0% by weight of the synthetic rubber based on the total weight of the rubber mixture.

5. The thermoplastic resin composition of claim 1, wherein the synthetic rubber includes one or more selected from the group consisting of a diene-based rubber polymer and an acrylic rubber polymer.

6. The thermoplastic resin composition of claim 1, wherein the thermoplastic resin composition includes 20.0 to 40.0% by weight of the rubber.

7. The thermoplastic resin composition of claim 1, wherein the thermoplastic resin composition includes 35.0 to 68.0% by weight of the vinyl aromatic monomer unit.

8. The thermoplastic resin composition of claim 1, wherein the thermoplastic resin composition includes 6.0 to 30.0% by weight of the vinyl cyanide-based monomer unit.

9. The thermoplastic resin composition of claim 1, wherein the shell includes a (meth)acrylate-based monomer unit grafted to the rubber.

10. The thermoplastic resin composition of claim 1, wherein the non-grafted polymer includes a (meth)acrylate-based monomer unit.
